Europäisches Patentamt

**European Patent Office**

Office européen des brevets

(11) Publication number: **0 104 862**
**A1**

(12) **EUROPEAN PATENT APPLICATION**

(21) Application number: **83305495.0**

(22) Date of filing: **19.09.83**

(51) Int. Cl.³: **B 23 K 31/06**
**B 23 K 9/02**

(30) Priority: **20.09.82 GB 8226689**

(43) Date of publication of application:
**04.04.84 Bulletin 84/14**

(84) Designated Contracting States:
**BE DE FR IT NL SE**

(71) Applicant: **British Steel Corporation**
**9 Albert Embankment**
**London SE1 7SN(GB)**

(72) Inventor: **Prouten, Stephen**
**407 St. John's Road**
**Kettering Northants, NN15 5HH(GB)**

(72) Inventor: **Parker, Michael John**
**93 Barnwell Street**
**Kettering Northants, NN16 0JE(GB)**

(74) Representative: **Heath, Peter William Murray**
**FRY HEATH & CO. Seloduct House 16-18 Station Road**
**Redhill Surrey RH1 1NF(GB)**

(54) Improvements in or relating to the production of welded tube.

(57) The invention provides a method of welding a bead along the edges of metallic plate or strip formed into tube shape by means of a welder head movably carried by a beam (2) disposed longitudinally to the tube (1), comprising the steps of monitoring the deviation of the seam (3) at a first point along the tube (1) from a plane passing through or parallel to the tube axis, monitoring the deviation of the weld line from the same plane at a second position along the tube (1), computing from the data so acquired a deviation factor for the weld line along the tube, and applying a weld bead along the weld seam whilst monitoring the position of the welding head about the tube and at the same time producing a signal indicative of variations during welding between the transverse position of the welding head and the previously calculated deviation factor for that position along the tube.

FIG.1.

EP 0 104 862 A1

## Improvements in or relating to the production of Welded Tube.

This invention relates to the production of welded tube and more particularly the production of longitudinally metallic welded tube of large diameter.

One frequently used manner of manufacture of large ferrous (and non ferrous) metal tubes involves forming a metal plate into cylindrical form by a rolling operation, and then bringing together the edges along the tube to a usually 'V' shaped seam which is then subjected to a welding step, preferably by submerged arc welding, by which is meant an automatic flux shielded method of welding wherein the electrode wire is completely submerged beneath a flux.

A problem experienced with this method of tube manufacture is that frequently, after rolling, the edges of the plate along the tube, although often substantially straight, are not parallel to the side walls of the cylinder formed by the rolled metal. This is a particular problem when dealing with heavy gauge plate. The problem arises not so much in relation to the misalignment of the edges of the plate to the axis of the tube, which does not effect the acceptability of the tube for all normal uses thereof, but in relation to the procedure of welding the seam.

This is particularly true with regard to the submerged arc welding process where the electrode wire is normally submerged in molten flux, and the actual site of the weld is obscured from vision, so that misalignment of the weld line from the axial direction of the tube can be difficult to follow during welding.

However submerged arc welding is favoured in many instances because relatively high welding currents can be used thereby giving deep penetration, and good thermal efficiency is produced because much of the welding area is below the metal surface. It follows that the process is a high dilution process with approximately twice as much plate or strip being melted as wire. In practice for metallurgical reasons, very high welding currents are not often used, it being preferred to deposit metal in layers to take advantage of the normalizing resulting from reheating of previously deposited metal.

The welding operation is commonly carried out firstly by manually tack welding metal tabs to the extreme ends of the metallic cylinder bridging either side of the seam gap between adjacent edges, and then tack welding the edges together at intervals along the proposed weld line so as to provide a temporary fixing for the seam gap. Subsequently the welded seam along the tube is usually formed by mechanised welding.

The mechanised welding system usually forms the weld along the tube in two stages . First of all the internal weld beam is formed, this frequently being done by guiding a welding head by means of a leading mechanical feeler running in the open seam gap to provide directional weld control between the temporary metal tabs at the end of the adjacent edges. It is to be noted that difficulties can arise with this arrangement at the tube ends adjacent the metal tabs. Clearly such a guiding arrangement is not possible for forming the external weld bead, and in practise this second stage of the system is normally accomplished by manual operation in which an operator by means of a control wheel or some such familier device guides the welder head and visually aligns it with the tube seam.

This second stage commonly includes a welder head mounted on a carriage or sub-beam which travels along a straight beam parallel to the tube. Provision will also be included for traverse of the welder head to both sides during the sub-beams longitudinal travel.

This form of control for formation of the external weld bead creates serious difficulties, particularly when welding thick wall pipe by the submerged arc method, in that it is desirable and common welding practice to build up the external welded bead by adjacent layers of welding material thus involving several passes of the welder head along the weld seam. To minimise welding defects, it is crucial to be able to ensure that the first weld layer is placed accurately in the centre of the site of the seam and that symmetrical in-fill layers from each seam edge are subsequently placed within the groove.

It is an object of the present invention to enable the above referenced difficulties to be overcome or at least substantially reduced in the production of welded tube.

According to the invention, there is provided a method of welding a bead along the edges of metallic plate or strip formed into tube shape by means of a welder head movably carried by a beam disposed longitudinally to the tube, comprising the steps of monitoring the deviation of the seam at a first point along the tube from a plane passing through or parallel to the tube axis, monitoring the deviation of the weld line from the same plane at a second position along the tube, computing from the data so acquired a deviation factor for the weld line along the tube, and applying a weld bead along the weld seam whilst monitoring the position of the welding head about the tube and at the same time producing a signal indicative of variations during welding between the transverse position of the welding head and the previously calculated deviation factor for that position along the tube.

The invention is particularly applicable to forming the external bead along the weld seam, in which case a weld head support beam is disposed longitudinally above the tube, the movable welding head being carried therebelow.

Means may be provided for correcting the position of the welder head in dependence on the error signal produced.

The invention includes within its scope apparatus for carrying out the method herein defined. In order that the invention may be more readily understood one embodiment thereof will now be described by way of example with reference to the accompanying drawings in which:-

Figure 1 is a schematic isometric view of apparatus according to the invention;

Figure 2 and 3 are schematic plan views of pipes in slightly different angular positions immediately prior to longitudinal welding in apparatus of Figure 1;

Figure 4 is a block diagram showing the operation of apparatus according to the invention; and

Figure 5 is a cross section of a typical multi-pass weld.

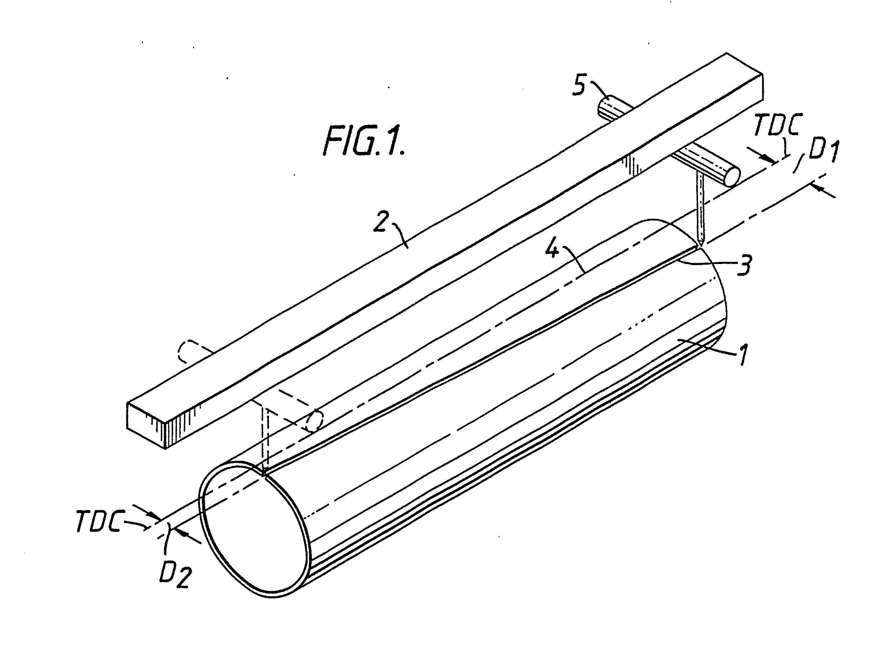

Referring now to figure 1, it will be seen that a tube 1 is located beneath a beam 2 extending longitudinally to the tube 1 and adapted to carry a welding head on a sub-beam 5 movable along the beam for welding a seam 3 formed from adjacent edges of a plate from which the tube 1 has been rolled.

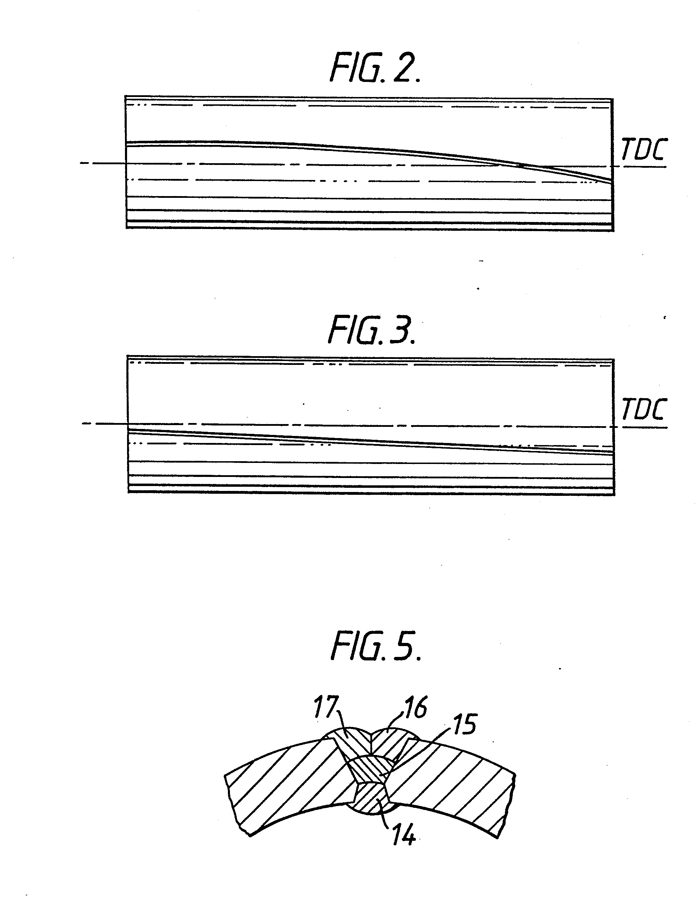

It is to be noted that the seam 3 is somewhat twisted and misaligned with respect to the centre line of the tube wall immediately beneath the beam 2. As exemplified in Figure 3, the line of the seams may lie to one side of and subtend a single angle with the welder beam centre line. At times it is possible for example as shown in Figure 2, that the extreme ends of the line at the tube ends lie to the left and right of the welder beam centre line respectively and the weld line is curved.

Where the seam is a straight line as shown in Figure 3 it can be seen that the distance of the seam from the welder beam centre line(taken as a datum line)is proportional to the distance along the tube length.

This can be expressed mathematically as :-

$$d = l \times m + D_1$$

where d is the distance of the seam from the welder beam centre line at a length l along the pipe.

m is the 'slope' of the tube's displacement and $D_1$ is the distance of the seam from the welder at the start of the tube, i.e. when l = 0.

The variable m can be expressed for any pipe as:

$$m = \frac{D_2 - D_1}{L}$$

where $D_2$ is the distance of the seam from the welder at a predetermined distance L from the end of the tube. The distance L can be the tube's length.

Therefore $d = l \times \left[ \dfrac{D_2 - D_1}{L} \right] + D1$

A linear motion transducer, such as a linear potentiometer is fitted to the welder head travelling sub-beam 5 to provide a measure of the displacement of the welder head, and hence the weld seam, in a direction at right angles to the axis of the beam (2).

A second linear transducer, which may be a line or wire connected to the periphery of a resiliently urged drum carrying a pulse generator, is fitted to the welder head sub-beam 5, so that the longitudinal position of the welding head along the tube can be determined.

Optical sighting means (not shown) are provided for the operator to accurately align the welding equipment with the weld seam.

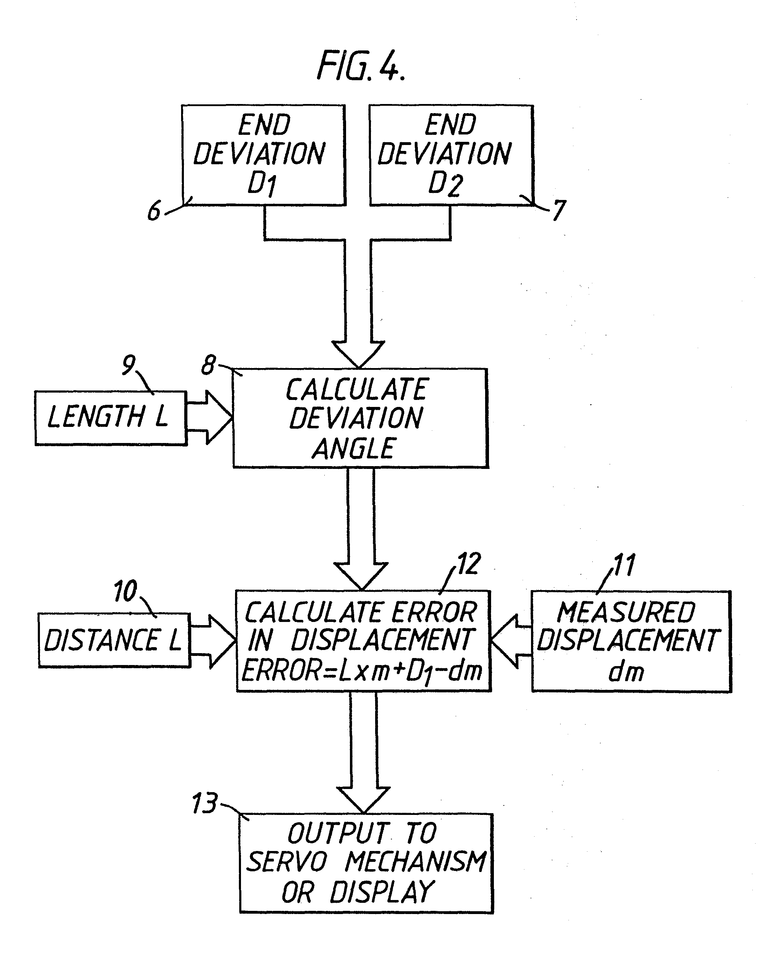

In practice the operator will take a reading of the transverse position of the weld seam relative to the datum line at one end of the tube, and then take a second reading of the transverse position of the weld seam relative to the datum line at a known distance along the length of the tube. In some instances these two readings can be taken at the ends of the tube as shown at 6 and 7 in Figure 4.

These readings are then fed to a computing device 8, together with the length between the readings from 9 to provide a deviation factor of the seam line (assuming a straight seam line) for the particular tube concerned.

Welding then commences with the laying down of a weld bead within the weld seam from one end of the tube to the other. During the welding operation, at any point in the welder carriage's longitudinal travel 10, the difference between the actual position 11 of the welding head from the datum line in relation to its theoretical desired position in accordance with the deviation factor for that tube is computed at 12 and arranged to provide an error signal from which is calculated and initiated at 13, necessary corrective action to bring the welder head into line with the weld seam.

The computed output can be applied to any suitable form of servo mechanism to provide fully automatic control to the welder head. Thus, with the inclusion of relevant data relating to welding parameters for the tube and welding seam for the tube, a fully automatic welding operation is possible.

Where the seam is not a straight line but is curved, as shown in Figure 2 the tube is divided theoretically into a series of short lengths, each lengh being treated as a separate tube. Extra datum points (Dn1.....DN2) can be established,the number generally being chosen to be more or less proportional to the severity of the curved beam. From this data a "line of best fit" or an optimum linear path between points is calculated by the computing device 8 and its output applied to a welder head control.

The amount and direction of corrective action required to keep the welder head accurately in line above the welder line can be displayed for information of an operator.

Such an operator display can be in the form of a movable pointer, a digital readout, a graphic display, a line printer, a moving pen recorder or other suitable known means of electronic or electrical visual display.

In addition to welding longitudinally of the tube the invention can be applied to the operation and control of welding transversely of the tube where, for example, the tube is formed of more than one plate butted together to the configuration of the tube and welded together both along and transversely of the tube by the submerged arc system, for example.

Figure 5 shows in cross section how a typical multipass weld would be laid down. The prewelded inner bead is shown at 14, and 15 represents the first external bead to be applied. By retaining datum points (e.g. D1, D2) previously established and applying a known transverse offset to the welder head, the critical requirement of making subsequent welding passes 16 and 17 parallel to the initial weld bead can be achieved and welding defects greatly minimised.

By means of the invention, welding control of external seam welding can be provided substantially overcoming the difficulties hereinbefore referred to. In addition, the arrangement of the present invention can be used for internal seam welding control. In this latter context the arrangement would be advantageous in overcoming difficulties of providing accurate weld head location at the extreme ends of the tube to be welded, as mentioned previously hereinabove.

0104862

-9-

CLAIMS

1. A method of welding a bead along the edges of metallic plate or strip formed into tube shape by means of a welder head movably carried by a beam disposed longitudinally to the tube, comprising the steps of monitoring the deviation of the seam by a linear motion transducer at a first point along the tube from a plane passing through or parallel to the tube axis, monitoring the deviation of the weld line from the same plane at a second position along the tube, computing from the data so acquired a deviation factor for the weld line along the tube, and applying a weld bead along the weld seam whilst monitoring the position of the welding head about the tube and at the same time producing a signal indicative of variations during welding between the transverse position of the welding head and the previously calculated deviation factor for that position along the tube, the position along the tube at which deviations of the seam are monitored being determined by a further linear motion transducer.

2. A method as claimed in Claim 1 wherein the signal indicative of variations during welding are applied to a servo mechanism to correct such variations and provide automatic control of the welding head.

3. A method as claimed in Claim 2 wherein the amount and direction of corrective action are displayed.

4. A method according to any one of the preceding claims wherein the welding is by a submerged arc process.

5. A method as claimed in Claim 4 wherein the tube is welded from a plurality of plates, and a seam between adjacent plates transverse to the axis of the tube is welded by monitoring the deviation of the seam from a plan transverse to the axis of the tube at a first point, monitoring the deviation of the seam from the same plane at a second point along the seam, computing from the data so acquired, a deviation factor for the seam, or weld line, around the tube, and applying a weld bead along the seam whilst monitoring the position of the welding head about the tube and at the same time producing a signal indicative of variations during welding between the longitudinal position of the welding head and the previously calculated deviation factor for that transverse position.

6. A method as claimed in any one of the preceding claims for welding along a curved seam wherein deviation of the weld line is monitored at a series of points along the total length of the tube to provide a series of deviation factors for the weld line from point to point.

7. Apparatus for welding abead along the edges of metallic plate or strip formed into tube shape by means of a welder head movably carried by a beam disposed longitudinally to the tube, comprising a linear potentiometer for monitoring the deviation of the seam at a first point along the tube from a plane passing through or parallel to the tube axis, and for monitoring the deviation of the weld line from the same plane at a second position along the tube, means for computing from the data so acquired a deviation factor for the weld line along the tube, and a welding device for applying a weld bead along the weld seam whilst monitoring the position of the welding head about the tube, and means for producing a signal indicative of variations during welding between the transverse position of the welding head and the previously calculated deviation factor for that position along the tube.

8.   Apparatus as claimed in Claim 7 wherein the position along the tube at which deviations of the seam are monitored is determined by a line or wire connected to the periphery of a resiliently urged drum carrying a pulse generator and fitted to the welder head.

9.   Apparatus as claimed in any one of Claims 7 or 8 wherein the welding device is    a submerged arc welding device.

10.   Apparatus as claimed in Claim 9 wherein the tube is welded from a plurality of plates, and a seam is welded between adjacent plates transverse to the axis of the tube, including means for monitoring the deviation of the seam from a plane transverse to the axis of the tube at a first point and the deviation of the seam from the same plane at a second point along the seam, means for computing from the data so acquired a deviation factor for the seam, or weld line, around the tube, and a welding device for applying a weld bead along the seam whilst monitoring the position of the welding head about the tube and       means for producing a signal indicative of variations during welding between the longitudinal position of the welding head and the previously calculated deviation factor for that transverse position.

FIG.1.

FIG. 2.

TDC

FIG. 3.

TDC

FIG. 5.

17  16  15

14

FIG.4.

```
┌─────────────┐    ┌─────────────┐
│    END      │    │    END      │
│  DEVIATION  │    │  DEVIATION  │
│     D₁      │    │     D₂      │
└─────────────┘    └─────────────┘
   6                           7
```

Figure with blocks:

END DEVIATION $D_1$ (6), END DEVIATION $D_2$ (7)

LENGTH L (9) → CALCULATE DEVIATION ANGLE (8)

DISTANCE L (10) → CALCULATE ERROR IN DISPLACEMENT ERROR=$L \times m + D_1 - dm$ (12) ← MEASURED DISPLACEMENT $dm$ (11)

→ OUTPUT TO SERVO MECHANISM OR DISPLAY (13)

# European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 059 203 (A.O. SMITH CORP.) * Page 10, line 5 - page 11, line 6; figure 6 * | 1-3 | B 23 K 31/06 B 23 K 9/02 |
| | --- | | |
| Y | DE-A-2 647 290 (DAIMLER-BENZ AG) * Claims; figures * | 1-3 | |
| | --- | | |
| Y | DE-A-2 741 728 (INDUSTRIE-WERKE KARLSRUHE AUGSBURG AG) * Claims; figures * | 1-3 | |
| | --- | | |
| Y | DE-A-3 143 834 (KOMATSU SEISAKUSHO K.K.) * Claims; figures * | 1-3 | |
| | --- | | TECHNICAL FIELDS SEARCHED (Int. Cl. ³) |
| Y | EP-A-0 017 167 (MESSER GRIESHEIM GMBH) * Page 18, line 26; claims; figures * | 1-4 | B 23 K 9/00 B 23 K 31/00 B 23 K 37/00 B 23 Q 15/00 |
| | --- | | |
| Y | US-A-4 288 020 (W.K. SEARLES et al.) * Abstract; figures * | 1-4 | |
| A | | 5,6,9, 10 | |
| | --- -/- | | |

The present search report has been drawn up for all claims

| Place of search | Date of completion of the search | Examiner |
|---|---|---|
| BERLIN | 18-11-1983 | WUNDERLICH J E |

## European Patent Office

## EUROPEAN SEARCH REPORT

| | DOCUMENTS CONSIDERED TO BE RELEVANT | | Page 2 |
|---|---|---|---|
| **Category** | **Citation of document with indication, where appropriate, of relevant passages** | **Relevant to claim** | **CLASSIFICATION OF THE APPLICATION (Int. Cl. ³)** |
| A | DE-A-2 840 351  (J. PEIFFERT et al.)<br>* Page  5,  last  line - page 6, line 4 * | 7 | |
| | --- | | |
| A | Patent Abstracts of Japan Vol. 6, no. 48, 27 March 1982 & JP-A-56-163864 | 8 | |
| | ----- | | |
| | | | **TECHNICAL FIELDS SEARCHED (Int. Cl. ³)** |
| | The present search report has been drawn up for all claims | | |

| Place of search<br>BERLIN | Date of completion of the search<br>18-11-1983 | Examiner<br>WUNDERLICH J E |
|---|---|---|